# EUROPÄISCHE PATENTSCHRIFT

(11) **EP 3 445 269 B1**
(45) Veröffentlichungstag und Bekanntmachung des Hinweises auf die Patenterteilung: **26.02.2020**
(21) Anmeldenummer: 16738063.3
(22) Anmeldetag: 22.06.2016
(51) Int. Cl.: A61C 1/08, A61C 9/00, B23B 47/28, A61C 13/00

(54) **VERFAHREN UND SYSTEM ZUR ERFASSUNG DER AUSRICHTUNG VON WENIGSTENS EINER BOHRHÜLSE IN EINER FÜR DIE LAGERICHTIGE IMPLANTATION VON ZAHNIMPLANTATEN HERGESTELLTEN BOHRSCHABLONE**
METHOD AND SYSTEM FOR DETECTING THE ALIGNMENT OF AT LEAST ONE DRILL SLEEVE IN A DRILL TEMPLATE PRODUCED FOR IMPLANTING DENTAL IMPLANTS IN THE CORRECT POSITION
PROCÉDÉ ET SYSTÈME POUR DÉTECTER L'ORIENTATION D'AU MOINS UN MANCHON DE FORAGE DANS UN GABARIT DE FORAGE FABRIQUÉ POUR L'IMPLANTATION D'IMPLANTS DENTAIRES DANS LA BONNE POSITION

(30) Priorität: 20.04.2016 DE 102016004641
(43) Veröffentlichungstag der Anmeldung: 27.02.2019
(73) Patentinhaber: Scheffer, Axel, 40668 Meerbusch (DE)
(72) Erfinder: Scheffer, Axel, 40668 Meerbusch (DE)
(74) Vertreter: Cohausz Hannig Borkowski Wißgott
(86) Internationale Anmeldenummer: PCT/EP2016/001058
(87) Internationale Veröffentlichungsnummer: WO 2017/182046

(56) Entgegenhaltungen:
- WO-A1-2004/076106
- DE-A1-102011 083 439
- DE-A1-102014 007 870
- JP-A- 2003 245 289
- US-A1- 2015 099 241

## Beschreibung

Die Erfindung betrifft ein Verfahren und ein System zur Erfassung der Ausrichtung von wenigstens einer Bohrhülse in einer Bohrschablone, insbesondere relativ zum Kiefer einer Person. Bevorzugt betrifft die Erfindung ein Verfahren, das es ermöglicht anhand der erfassten Ausrichtung die Genauigkeit zu überprüfen von einem durch eine Bohrhülse definierten Leitkanal für die Führung eines Bohrwerkzeuges, bei dem der wenigstens eine zu überprüfende Leitkanal durch eine den Leitkanal definierende Bohrhülse in Abhängigkeit von Positionsdaten an einem einen Negativabdruck der Kieferstruktur aufweisenden Abdruckelement angeordnet wird.

Die Positionsdaten sind dabei solche Planungsdaten, welche die gewünschte Position, also die Soll-Position des Leitkanales bzw. der Bohrhülse bestimmen. Solche Positionsdaten können z.B. durch virtuelle Platzierung der Bohrhülse / des Leitkanales oder eines Implantates in einer virtuellen 3D-Kieferdarstellung eines Patienten erstellt sein, sich also durch die virtuelle Planung eines Leitkanales ergeben, z.B. einer 3D-Bildgebung eines Dentalen Volumentomogramms (DVT) oder eines Computertomogramms (CT) oder einer gerenderten Oberflächendarstellung (z.B. STL-Daten)

Bei der zahntechnischen Anfertigung einer Bohrschablone kann es zu Abweichungen zwischen der Ist-Position einer Bohrhülse und der Soll-Position kommen, so dass also auch die Ist-Positionsdaten einer Bohrhülse von den eingangs genannten Soll-Positionsdaten abweichen. Bei Benutzung einer solchen Bohrschablone kommt es somit dann auch zu einer Abweichung des Implantates von der geplanten Position.

Um festzustellen, ob eine Abweichung vorliegt und ob eine Abweichung noch im tolerablen Bereich liegt, werden Prüfungen an der fertiggestellten Bohrschablone vorgenommen. Diese Prüfungen sind bislang sehr aufwändig und werden daher nur selten angewendet.

Verfahren dieser Art sind im Stand der Technik bekannt. Im Wesentlichen beruhen diese Verfahren darauf, dass die Lage eines Referenzkörpers, der in die zu überprüfende Bohrhülse eingebracht wird, über Projektion oder taktile Geometrieerfassung ermittelt wird.

Als Ergebnis der bislang verwendeten Überprüfungsverfahren werden die Abweichungen vom Sollwert in Zahlenwerte ausgegeben. Diese Art der Darstellung von Abweichungen vom Sollwert ist in der Regel schwer zu überblicken und vom Chirurgen bislang nicht in die entsprechende Kieferposition nachzuvollziehen.

WO2004/076106 offenbart ebenfalls ein Verfahren zur Erfassung der Ausrichtung von wenigstens einer Bohrhülse in einer Bohrschablone sowie ein korrespondierendes System.

Es ist daher eine erste Aufgabe der Erfindung eine einfache und präzise Erfassung der Ausrichtung von wenigstens einer Bohrhülse in einer Bohrschablone bereitzustellen. Eine bevorzugt zweite Aufgabe ist es anhand der erfassten Daten eine Bewertung der gemessenen Ausrichtung vornehmen zu können, insbesondere zu ermöglichen, Abweichungen von den geplanten Soll-Positionen eines Leitkanales festzustellen. Eine bevorzugt weitere Aufgabe ist es, festgestellte Abweichungen nachvollziehbar darzustellen, um hierdurch sicherzustellen, dass die für die Implantation vorgesehenen Bohrungen keine Nervenbahnen oder andere gefährdete Nachbarstrukturen verletzen oder Sicherheitsabstände unterschritten werden. Insbesondere soll so die Erfindung dem Behandler ermöglichen, die Position des durch eine Bohrhülse definierten Leitkanals oder das zu positionierende Implantat anhand von zwei- und dreidimensionalen Visualisierungen schon vor der Operation auf die Unschädlichkeit zu prüfen, das heißt ob eventuell durch die notwendige chirurgische Vorbereitung der Implantation benachbarte gefährdete Strukturen verletzt werden.

Die Aufgabe wird gemäß der Erfindung durch ein Verfahren mit den Merkmalen des Anspruchs 1 und ein System mit den Merkmalen des Anspruchs 8. Bevorzugte Ausführungsformen sind in den abhängigen Ansprüchen gelöst. Ein Abdruckelement mit einem Negativabdruck der Kieferstruktur einer Person wird erstellt, in welches zur Bildung einer Röntgenschablone wenigstens drei zueinander beabstandete und röntgensichtbare / röntgenstrahlabschwächende Referenzkörper eingebracht werden.

Ein Abdruckelement kann z.B. als eine tiefgezogene Negativform ausgebildet sein, an der die Referenzkörper für die Bildung der Röntgenschablone befestigt werden. Ein solches Befestigen kann durch Ankleben oder Einstecken in hergestellte Bohrungen erfolgen.

Dieses als tiefgezogene Negativform ausgebildete Abdruckelement oder auch jegliches anders hergestellte Abdruckelement kann bevorzugt auf einem Kiefermodell (in der Regel aus Gips) bzw. auf der Basis eines solchen hergestellt werden, wobei das Kiefermodell z.B. über ein Ausgießen eines Abdruckes gewonnen wird, der z.B. mit einer elastischen Abdruckmasse erstellt wird.

Zur Herstellung der Tiefziehform oder auch anderer Arten von Abdruckelementen können weiterhin z.B. hinterschnittene Zahn- oder Kieferstrukturen des Kiefermodells vor der Herstellung, insbesondere vor dem Tiefziehvorgang ausgeblockt / ausgefüllt werden. Ein Abdruckelement gemäß der Erfindung, bevorzugt welches aus einem harten und verwindungssteifen Material ausgebildet ist, weist somit in Bezug zu einer definierten Aufsetzrichtung auf die Kieferstruktur eines Patienten bevorzugt keine Hinterschneidungen auf. Insbesondere kann so sichergestellt werden, dass keine Verletzungen beim Einsetzen des Abdruckelements eintreten.

Alternativ können die Kiefermodellherstellung und auch die Herstellung des Abdruckelementes auch über einen 3D-Scan im Mund des Patienten und anschließender Produktion über 3D-Druck oder Stereolithografie o.ä. erfolgen. Der Vorgang der Modellherstellung und des Ausblockens von Hinterschneidungen kann virtuell erfolgen. Demnach kann über 3D-Druck oder ähnliches, bevorzugt über ein additives Herstellungsverfahren die Herstellung des Abdruckelementes direkt erfolgen.

Unabhängig von der Art der Herstellung ist es für das Abdruckelement wesentlich, dass es immer wieder reproduzierbar an der Kieferstruktur eines Patienten befestigt werden kann. Um diese Reproduzierbarkeit zu gewährleisten ist das Abdruckelement aus einem bevorzugt starren, insbesondere nicht elastischen Material ausgebildet. Hier kann bevorzugt ein nicht elastomerer Kunststoff gewählt werden, wie z.B. ein Thermoplast oder Duroplast. Bevorzugt eingesetzte Kunststoffe sind z.B.: Polyethylenterephthalat oder Polystyrol.

Insbesondere ist darauf hinzuweisen, dass es sich bei einem Abdruckelement gemäß der Erfindung nicht um ein solches Element mit einem Abdruck der Kieferstruktur handelt, das mit einer typischerweise elastischen Abdruckmasse direkt von der Original-Kieferstruktur des Patienten erstellt ist. Es handelt sich bei einer Herstellung über Abdrücke bevorzugt um einen Abdruck zumindest zweiter Generation, d.h. der Erstellung des Negativabdruckes des erfindungsgemäßen Abdruckelementes geht mindestens eine frühere Erstellung eines Negativ- und Positivabdruckes voraus, wobei das Abdruckelement der Erfindung auf der Basis dieses genannten Positivabdruckes hergestellt wird, der dem zuvor genannten Kiefermodell entspricht.

Das Abdruckelement selbst kann neben Tiefziehverfahren auch über 3D-Druck, Frästechnik, Druckguss- oder Druckspritzverfahren oder ähnliches hergestellt werden.

Um eine Lage eines räumlichen Körpers exakt dreidimensional zu erfassen und wiederzugeben, sind mindestens drei röntgenologisch zweifelsfrei wieder zu identifizierende Punkte eines Körpers räumlich zu erfassen. Dies kann beispielsweise mit den genannten wenigstens drei röntgensichtbaren / röntgenstrahlabschwächenden z.B. stecknadelkopfgroßen, bevorzugt kugelförmigen Referenzkörpern, die verteilt an dem Abdruckelement angebracht sind, erreicht werden, z.B. je einer in den beiden jeweiligen seitlichen Kieferbereichen und einer im Frontbereich.

Als röntgensichtbare Referenzkörper werden dabei solche Körper verstanden, die in einem röntgenologisch erfassten Bild dargestellt werden und bevorzugt durch einen Betrachter visuell erkennbar sind. Solche Körper sind zumindest teilweise absorbierend für Röntgenstrahlung und somit röntgenstrahlabschwächend.

Für die lagerichtige Zuordnung der zu planenden Implantate können in einer möglichen Ausführung noch weitere röntgensichtbare Referenzkörper und/oder formschließende Elemente an dem Abdruckelement bzw. der Röntgenschablone angeordnet werden, z.B. für die Montage an übergeordnete Bearbeitungsstrukturen. Die evtl. zur lagerichtigen Anbringung der Bohrhülsen verwendeten weiteren röntgensichtbare Referenzkörper und/oder formschließende Elemente in einem Befestigungselement können entfernt werden, insbesondere wenn Sie nicht mehr benötigt werden. Die mindestens drei zueinander beabstandeten röntgensichtbaren Referenzkörpern verbleiben in der Röntgenschablone.

Nach dieser Präparation des Abdruckelementes, welches den Negativ-Abdruck des Unter- oder Oberkiefers einer Person zumindest teilweise darstellt, wird daraus durch die Anbringung der Referenzkörper die Röntgenschablone hergestellt. Mit ihr wird erfindungsgemäß eine erste dreidimensionale röntgenologische Erfassung durchgeführt, bei welcher der Kiefer der Person zusammen mit der die Referenzkörper aufweisenden formschlüssig am Kiefer befestigten Röntgenschablone erfasst wird.

Dies kann z.B. durch eine sogenannte Dentale-Volumentomografie, DVT, oder auch durch eine Computertomographie (CT) erfolgen. Bei einer solchen Erfassung werden Daten erfasst, die es ermöglichen mittels einer Visualisierungssoftware eine virtuelle 3D-Darstellung des Kiefers zusammen mit den erkennbaren Referenzkörpern der Röntgenschablone vorzunehmen.

Ein weiterer Vorteil kann bei Einsatz einer in der Tomographie sichtbaren Röntgenschablone genutzt werden: Man kann die unterschiedlichen und im Röntgenbild nicht sichtbaren Bereiche der Kieferschleimhaut (die fixierte - auch keratinisierte - und die unbefestigte - auch nicht keratinisierte - Schleimhaut) auf der Schablonenoberfläche röntgensichtbar markieren. Diese Informationen können bei der Implantatplanung sinnvoll genutzt werden.

Ein weiterer Vorteil kann bei Einsatz einer in der Tomographie sichtbaren Röntgenschablone genutzt werden: Die Röntgenschablone kann Zonen mit unterschiedlichen, bevorzugt aber bekannten Schwächungsgraden (für Röntgenstrahlen) besitzen, um die zu erstellende Tomographie zu kalibrieren, insbesondere auf Hounsfield-Einheiten zu kalibrieren. Damit können die Kieferabschnitte besser auf eine für die Implantation notwendige Knochendichte beurteilt werden. Die Kalibrierung auf Hounsfield Einheiten ist vorteilhaft, um die Visualisierung der Bohrstollen zu vereinfachen oder zu ermöglichen. Durch eine solche Kalibrierung kann in den unterschiedlichen Bereichen des Kiefers unterschieden werden, was noch Knochen ist und was nicht mehr als Knochen zählt.

Die Erfindung kann hier vorsehen, dass die Zonen mit den unterschiedlichen Schwächungsgraden in einer Kalibier-Platte angeordnet sind, die mit der zuvor genannten Röntgenschablone verbunden wird. Eine solche Kalibrier-Platte kann in Aufsicht U-Form aufweisen, insbesondere somit den Zahnreihen-, bzw. Kieferknochenverlauf nachzeichnen. Zwischen dem inneren und äußeren Rand können sich mehrere Zonen mit den bekannten Schwächungsgraden erstrecken.

Am inneren und äußeren Rand der Kalibrier-Platte können zusätzliche Röntgenmarker angeordnet sein, insbesondere welche auch dazu dienen können, die Röntgenschablone mit der Kalibrier-Platte in einer übergeordneten Befestigungsstruktur lagerichtig und reproduzierbar durch mechanischen Formschluß anordnen zu können, z.B. um mit Hilfe der Befestigungsstruktur die wenigstens eine Bohrhülse zu setzen.

Hierfür können die zusätzlichen Röntgenmarker, die somit auch als formschließende Elemente dienen, über wenigstens eine der Kalibrier-Plattenoberflächen, bevorzugt über beide Kalibrier-Plattenoberflächen vorspringend ausgebildet sein. Die Kalibrier-Platte kann - abgesehen von den zusätzlichen Röntgenmarkern und /oder einem verdickten äußeren und inneren Rand - als ebene Platte ausgebildet sein.

Eine solche Kalibrier-Platte kann vor der ersten röntgenologischen Erfassung an der Röntgenschablone der eingangs genannten Art befestigt werden, z.B. durch Verkleben. Dabei wird bevorzugt die Kalibrierplatte auf die Röntgenschablone aufgelegt. Die Röntgenschablone wird in dieser Ausführung sodann mit der Kalibrier-Platte röntgenologisch erstmals mit dem Patienten erfasst, nachdem diese am Patientenkiefer befestigt wurde.

Anschließend wird die Kalibrier-Platte wieder entfernt. Das weitere nachfolgend beschriebene Vorgehen erfolgt unabhängig davon, ob die Röntgenschablone mit oder ohne eine solche Kalibrier-Platte erfasst wurde.

Anhand dieser ersten Erfassung können auch unter 3D-Visualisierung des betroffenen Kiefers die Planung der Implantate und die Bestimmung von deren Position bzw. der Position dafür benötigter Leitkanäle erfolgen, z.B. mit der Visualisierungssoftware eines DVT- oder CT-Gerätes. Die Positionsdaten, die z.B. kartesische und/oder Winkelkoordinaten umfassen können, können bevorzugt in Zuordnung zu dieser ersten Erfassung gespeichert werden, insbesondere als später zu verwendende Soll-Positionsdaten bzw. Soll-Planungsdaten.

Die aus dem Abdruckelement zuvor hergestellte Röntgenschablone wird sodann genutzt, um hieraus in einem nächsten erfindungsgemäßen Schritt eine Bohrschablone zu erstellen, wofür wenigstens eine Bohrhülse in der Röntgenschablone befestigt wird.

Eine solche Befestigung kann anhand bzw. in Abhängigkeit der eingangs genannten Soll-Positionsdaten bzw. -Planungsdaten erfolgen, um mittels der Bohrhülse im besten Fall den geplanten Verlauf des Leitkanals zu erhalten.

Beispielsweise kann eine den Leitkanal definierende oder diesen bildende Bohrhülse in Abhängigkeit von geplanten Soll-Positionsdaten an der den Negativabdruck der Kieferstruktur aufweisenden Röntgenschablone dadurch angeordnet werden, dass ein ein Passungsstück aufweisendes, an die benötigte Position des Leitkanales angepasstes Montageelement durch Materialbearbeitung mittels einer Bearbeitungsmaschine gefertigt wird, wobei während der Fertigung in Abhängigkeit der Soll-Positionsdaten bzw. -Planungsdaten eine formschließende Montagestruktur, bevorzugt in wenigstens zwei Richtungen periodische formschließende Montagestruktur am Montageelement erzeugt wird, ein den Leitkanal, insbesondere in Form einer Metallhülse bereits umfassendes Kanalelement mit einem zum Passungsstück des Montageelementes korrespondierenden Passungsbereich, insbesondere der durch den Leitkanal selbst gebildet wird, an dem gefertigten Montageelement befestigt wird und die miteinander befestigte Paarung von Montageelement und Kanalelement mit der formschließenden Montagestruktur des Montageelementes an einer in Abhängigkeit der Positionsdaten berechneten Stelle an einer eine korrespondierende formschließende Struktur, insbesondere in wenigstens zwei Richtungen periodische Struktur aufweisenden Montageplatte befestigt wird, gegenüberliegend zur Montageplatte mit einem Befestigungselement die Röntgenschablone befestigt wird und das Kanalelement durch Befestigung, insbesondere klebende Befestigung und Lösung vom Montageelement an der Röntgenschablone angeordnet wird.

Eine solche Befestigung einer Bohrhülse bzw. eines Leitkanals an einem Abdruckelement ist beispielsweise in der DE 10 2014 007 870 A1 beschrieben und dem Fachmann bekannt. Im Rahmen der Erfindung wird anstelle des in der DE 10 2014 007 870 A1 beschriebenen Abdruckelementes die daraus zuvor hergestellte Röntgenschablone verwendet.

Für die vorliegende Erfindung ist diese Art der Befestigung nicht zwingend beschränkend, sondern nur als Beispiel zu verstehen. Für die vorliegende Erfindung kommt es nicht darauf an, auf welche Art die Befestigung der Bohrhülse, die den Leitkanal definiert, an der Röntgenschablone angebracht wird.

Es können weiterhin noch folgende Schritte vollzogen werden, um eine Bohrhülse lagerichtig in der Röntgenschablone zu befestigen:
1. Kunststoff im Bereich der Hülsenposition auf der Röntgenschablone im Überschuss auftragen
2. Bohrung in den aufgetragenen Kunststoff unter zu Hilfenahme von Navigationhilfen (GonyX, Hexapod-Tisch, etc.) vornehmen.
3. Eindrücken und Einkleben der Hülse von Hand oder unter zu Hilfenahme von Navigationhilfen
4. Händische Nachbearbeitung (Überschüsse reduzieren), Umgestaltung zur Bohrschablone und Politur

Das erfindungsgemäße Verfahren macht sich hier besonders zu Nutze, dass ein Abdruckelement mit einer radiologischen Referenz, also die genannte Röntgenschablone, die bei der Bildgebung am Kieferbereich des Patienten miterfasst wird, zu einer Bohrschablone umgearbeitet wird und dabei im Bereich der radiologischen Referenz unverändert bleibt, damit eine Überprüfung der Orientierung der Bohrhülsen radiologisch ermöglicht wird. Die röntgensichtbaren Referenzkörper der Röntgenschablone sollten also bei der Umarbeitung der durch dreidimensionale Röntgenbildgebung (DVT/CT) erfassten Röntgenschablone in eine Bohrschablone nicht verändert werden, um eine spätere Überprüfung der Bohrhülsen ermöglichen zu können.

Der Vorteil dieser Vorgehensweise, dass die Röntgenschablone (das Abdruckelement mit radiologischer Referenz) zu einer Bohrschablone umgearbeitet wird und keine neue Schablone hierfür angefertigt wird, liegt darin, dass der fehlerfreie Sitz dieser Röntgenschablone bzw. des ursprünglichen Abdruckelementes am Kiefer des Patienten vor der röntgenologischen Bildgebung (DVT) überprüft und gegebenenfalls angepasst werden kann, ohne zusätzliche Maßnahmen im weiteren Vorgehen für die Passgenauigkeit und weitere Überprüfungen auszulösen, die sonst bei neu anzufertigenden Schablonen erforderlich werden.

Ein weiterer Vorteil dieser Vorgehensweise liegt darin, dass der Sitz der Röntgenschablone auf dem Kiefer oder der Zähne des Patienten in der MPR-Darstellung (Multiplanare Rekonstruktion) der Tomographie überprüft werden kann.

Nach der Befestigung der wenigstens einen Bohrhülse ist es erfindungsgemäß vorgesehen, deren Ausrichtung zu erfassen, insbesondere zum Zwecke der nachträglichen Prüfung der Abweichungen vom geplanten Verlauf.

Hierfür ist es erfindungsgemäß vorgesehen in die wenigstens eine Bohrhülse ein Referenzobjekt, welches selbst wenigstens drei beabstandete röntgensichtbare Referenzkörper umfasst, einzusetzen. Sofern mehrere Bohrhülsen gleichzeitig hinsichtlich der Ist-Positionen der durch sie definierten Leitkanäle erfasst werden sollen, kann demnach in jede der zu erfassenden Bohrhülsen ein solches jeweiliges Referenzobjekt eingesetzt werden.

Ein jeweiliges Referenzobjekt kann z.B. einen mit der Bohrhülse formschließenden Körper, z.B. zylindrischen Körper umfassen. Bei einem zylindrischen Körper kann dessen Außendurchmesser an den Innendurchmesser einer Bohrhülse so angepasst sein, dass der zylindrische Körper bevorzugt spaltlos, insbesondere also spielfrei, in die Bohrhülse eingesetzt werden kann. Hierdurch kann es erzielt werden, dass eine Achse des formschließenden Körpers, z.B. dessen Mittenachse, wenn dieser zylindrisch ausgebildet ist, kollinear zur Mittenachse des Leitkanales der Bohrhülse ausgerichtet wird.

Die Lage der Achse des Referenzobjektes relativ zu den wenigstens drei Referenzkörpern ist bekannt und z.B. in einem Datensatz einer Software zur Visualisierung abgelegt. Aus diesem Grund ist durch Positions- bzw. Lagebestimmung der Achse des Referenzobjektes anhand seiner Referenzkörper automatisch auch die Ist-Position des Leitkanales bestimmbar, da diese Positionen durch den Formschluss einander entsprechen.

Bevorzugt entsteht direkt durch das Einsetzen des formschließenden Körpers ein Formschluss, so dass das Referenzobjekt im Raum in Richtung der Bohrhülse automatisch korrekt ausgerichtet wird.

Die röntgensichtbaren Referenzkörper können z.B. alle nur auf einer Seite des formschließenden Körpers angeordnet sein. Eine Ausführung kann auch vorsehen, dass in axialer Richtung auf der einen Seite des genannten Körpers ein Referenzkörper und in der axialer Richtung betrachtet auf der anderen Seite des formschließenden Körpers wenigstens zwei Referenzkörper an diesem befestigt sind.

Der genannte eine Referenzkörper ist dabei, insbesondere durch seine Ausgestaltung in Größe und Lage, in Einsteckrichtung durch die Bohrhülse hindurchführbar und liegt bevorzugt in der gesteckten Position außerhalb der Bohrhülse, ebenso wie die anderen zur anderen Seite angeordneten Referenzkörper.

Ein System zur Durchführung des Verfahrens kann z.B. Bohrhülsen umfassen, die als Fertigelement in ein Kiefer-Abdruckelement bzw. hier die daraus hergestellte Röntgenschablone einbringbar sind zur Definierung eines Bohr-Leitkanales entlang der inneren Hülsenerstreckung und kann wenigstens ein Referenzobjekt umfassen, das wenigstens drei zueinander beabstandete röntgensichtbare Referenzkörper trägt und das an die Hülse angepasst ist, um unter Formschluss darin eingesteckt zu werden.

Dabei können eine jeweilige Bohrhülse und ein jeweiliges Referenzobjekt Strukturen aufweisen, die aneinander angepasst sind, um bei Einsetzen eines Referenzobjektes in eine Hülse ineinander zu greifen, insbesondere zur Erzielung einer Rotationsinvarianz, d.h. einer nicht drehbaren Steckverbindung. Die jeweiligen Strukturen sind bevorzugt an oder auf den aneinander angepassten Flächen angeordnet, bevorzugt an den zylindrischen Flächen oder sich gegenüberliegenden Ringflächen beider Elemente. Beispielsweise können die Bohrhülsen für die korrekte Ausrichtung der Implantate in einer festen Rotationsposition Kerben besitzen. In den Referenzkörpern können demnach entsprechende vorspringende Nasen angebracht sein, die in diese Kerben einrasten können. Sich gegenüberliegende Ringflächen von Bohrhülse und Referenzobjekt können z.B. so ausgebildet sein, dass diese in Eingriff miteinander bringbar sind, bevorzugt dabei jeweils eine von der Kreisform abweichende Form aufweisen, so dass der Eingriff nur in einer bestimmten Rotationsposition möglich ist. z.B. können die Ringflächen eine jeweilige Mehrkantform aufweisen, z.B. als korrespondierende Innen- und Außenmehrkantform, beispielsweise Sechskantform.

Die Kanten eines Implantateinbringpfostens können beim Einbringen des Implantates ebenso mit der Mehrkantform der Hülse in Einklang gebracht werden.

Eine Bohrhülse und/oder ein Referenzobjekt kann weiterhin Mittel, insbesondere eine Klemmvorrichtung aufweisen, mittels der die Mittenachsen von Hülse und Referenzobjekt aufeinander zentrierbar sind, insbesondere wenn eine Zentrierung nicht bereits in ausreichendem Maß durch einen bevorzugt spielfreien Sitz zwischen Bohrhülse und Referenzobjekt erfolgt.

Nach den eingangs genannten Schritten ist es gemäß dem Verfahren vorgesehen, dass eine zweite dreidimensionale röntgenologische Erfassung durchgeführt wird, bei der nur die Bohrschablone außerhalb des Kiefers des Patienten mit deren Referenzkörpern und das wenigstens eine darin eingesetzte Referenzobjekt mit dessen Referenzkörpern erfasst wird. Dies hat den Vorteil, dass der Patient für diese zweite röntgenologische Erfassung nicht bereit stehen muss und auch nicht einer weiteren Strahlenbelastung ausgesetzt wird.

Es ist hier besonders vorteilhaft, wenn ein Abdruckelement eines Kiefers, in dem später die Implantate eingebracht werden sollen, zuerst durch Anbringung von Röntgenreferenzkörpern als Röntgenschablone benutzt und später durch Anbringung von wenigstens einer Bohrhülse als Bohrschablone umgearbeitet und somit ein zweites Mal weiterverwendet wird, da sich bei beiden Verwendungen dann exakt dieselbe Passung zur Kieferstruktur des Patienten ergibt.

Wenn nämlich die Passung eines Abdruckelements bzw. einer daraus erstellen Röntgenschablone bereits manuell überprüft und im Patientenmund zusammen geröntgt wurde, kann diese Position für die Weiterverarbeitung als Bohrschablone als bekannt eingestuft werden. Dies ist für die Anwendungssicherheit der Bohrschablone während der OP und für die Überprüfung der Schablonengenauigkeit ein großer Vorteil. Die durch Röntgen bereits bekannte Position des Abdruckelementes bzw. der Röntgenschablone im Patientenmund kann für die Überprüfung der Bohrhülsen, die in die zur Bohrschablone umgestaltete Röntgenschablone eingearbeitet werden, herangezogen werden.

Auch hier wird bevorzugt die Erfassung so vorgenommen, dass mit den erfassten Daten eine virtuelle 3D-Darstellung aller Referenzkörper, also denjenigen von der Röntgenschablone und denjenigen von dem wenigstens einen Referenzobjekt erstellt werden kann.

Ist eine oder sind alle Bohrhülsen der Bohrschablone mit Röntgenreferenzobjekten bestückt, kann die Bohrschablone zur Erfassung aller Referenzkörper beispielsweise in einen Volumentomographen (DVT) oder Computertomographen gesetzt und gescannt werden. Hier kann ohne dass der Patient ein zweites Mal geröntgt werden muss, die Bohrschablone anhand der zusätzlich eingebrachten Röntgenreferenzobjekte allein geröntgt werden, um sie auf ihre Genauigkeit zu überprüfen. Die Lage aller Leitkanäle oder aller Implantate, die mit der fertiggestellten Bohrschablone erreicht werden, wird per EDV errechnet, da aus der Lage der Röntgenreferenzkörper jedes Referenzobjektes die jeweilige Position bestimmt werden kann.

Diese aus der Geometrie der Bohrschablone ermittelte Position der Leitkanäle / Implantate wird mit der Lage der geplanten Leitkanäle / Implantate verglichen, insbesondere durch Heranziehung der Planungsdaten, die z.B. in Zuordnung zur ersten Erfassung gespeichert sind.

Es kann in Zusammenhang mit der Überlagerung vorgesehen sein, dass virtuell der jeweilige zu einer Bohrhülse gehörende Leitkanal oder ein darin einzusetzendes Implantat in Relation zum Kiefer und/oder einem geplanten Leitkanal / Implantat visualisiert wird.

Insbesondere wird dies dadurch ermöglicht, dass die wenigstens drei röntgensichtbaren Referenzkörper an einem jeweiligen in eine Bohrhülse einsetzbaren bzw. eingesetzten Referenzobjekt die Lage des Referenzobjektes im Raum exakt definieren. Da dessen Lage durch Formschluss mit der Bohrhülse übereinstimmt und somit z.B. eine Achse von diesem parallel zur Mittenachsrichtung der Bohrhülse ist, ist somit in gleicher Weise der mit der Bohrhülse erzielte Leitkanal oder auch ein jeweiliger hierdurch bestimmter Bohrstollen selbst definiert durch die Referenzkörper des Referenzobjektes und kann in der Visualisierung dargestellt werden.

Besonders die Visualisierung von virtuellen zu erwartenden Bohrstollen in Abhängigkeit der erfassten Positionsdaten eines Referenzobjektes ist vorteilhaft, insbesondere da Bohrstollen sehr anschaulich dargestellt werden können, z.B. in einer opaken 3D-Darstellung des Kiefers. Ebenso kann der zu erwartende Knochenkontakt mit der Oberfläche des zu setzenden Implantats, insbesondere bei reduzierter Knochenmasse im spongiösen Bereich des Kiefers, prozentual oder auch in absoluten Werten zur Darstellung gebracht werden. Statt einer zahlenmäßigen Angabe des Verhältnisses vom derjenigen Implantatoberfläche, welche den Knochen kontaktiert zur gesamten Implantatoberfläche des kann ebenso eine Angabe beispielsweise über Balken-, Säulen- oder Tortendiagrammen erfolgen.

Zur besseren Ansicht des zu erwartenden Kontaktes zwischen Knochen und Implantat kann die Mantelfläche des zu erwartenden Implantatlagers als eine auf eine flache Ebene abgewickelte Fläche dargestellt werden. Als Implantatlager wird dabei diejenige Fläche des Implantates verstanden, die vom Knochen kontaktiert ist. Eine solche Darstellung kann separat oder auch zusammen mit der Visualisierung der zuvor genannten Überlagerung erfolgen.

Die Erfindung setzt somit den Chirurgen konkret in die Lage anhand der Visualisierung die Abweichungen zu beurteilen. Der Chirurg ist also nicht wie im Stand der Technik nur mit wenig aussagekräftigen Zahlenkolonnen konfrontiert. In bevorzugte Weiterbildung kann es vorgesehen sein anhand der Messdaten der ersten röntgenologischen Erfassung und der zweiten röntgenologischen Erfassung relativ zum Kiefer der Person die Ist-Positionsdaten eines zu einer jeweiligen Bohrhülse zugeordneten Leitkanales oder eines darin eingesetzten bzw. einzusetzenden Implantates zu errechnen und mit zugehörigen geplanten Soll-Positionsdaten zu vergleichen, insbesondere hieraus Abweichungen in Zahlenwerten zu ermitteln. Dabei kann z.B. die 3D-Darstellung, ebenso wie die Auswertung bzw. Bestimmung von Ist-Positionsdaten durch eine Visualisierungssoftware erfolgen, z.B. die eines DVT- oder CT-Gerätes oder separater Anbieter.

Strecken, Winkel und Koordinaten können z.B. direkt über diese Software, insbesondere des DVT- oder CT-Gerätes ermittelt werden.

Beispielsweise können Abweichungen ermittelt werden von den Implantatschultern eines virtuellen der jeweiligen Bohrhülse zugeordneten Implantates und des virtuellen geplanten Implantates oder von den Implantatspitzen des virtuellen der jeweiligen Bohrhülse zugeordneten Implantates und des virtuellen geplanten Implantates oder von den Mittenachsen des virtuellen der Bohrhülse zugeordneten Implantates und des virtuellen geplanten Implantates oder von den axialen Rotationswinkelstellungen des virtuellen der jeweiligen Bohrhülse zugeordneten Implantates und des virtuellen geplanten Implantates.

Zur Ermittlung von Abweichungen kann z.B. in einer Implantatplanungssoftware noch zusätzlich eine Prozedur programmiert werden, die über die Referenzkörper die jeweiligen Positionen der Bohrschablone und der Bohrhülsen / deren eingesteckte Referenzobjekte ermittelt und die Abweichungen von den geplanten Soll-Positionsdaten für den Implantologen errechnet. Das Programm kann die jeweilige geplante Implantatposition zur tatsächlich mit der Bohrschablone erzielten Implantatposition gegenüberstellen. So kann sich der Implantologe ein Bild machen, ob diese Bohrschablone für die geplante Operation geeignet ist. Die hier in Bezug zu Implantaten genannten feststellbaren Abweichungen bzw. Messwerte können in gleicher Weise für die Leitkanäle bestimmt werden, da die Implantatposition durch die Leitkanalposition zumindest weitgehend definiert ist.

Zusätzlich kann über den bekannten Schwächungsgrad der röntgensichtbaren Referenzkörper eine Knochendichtemessung benachbarter Kieferstrukturen im Volumentomogramm erfolgen. Wenn die Knochendichte bekannt ist, kann ebenfalls die geeignete Bohrfolge für das geplante Implantatbett ermittelt werden.

Der mit der ermittelten Bohrerfolge zu erzielenden Bohrstollen im Kiefer kann ebenso visuell dreidimensional in der gerenderten Knochendarstellung des Kiefers am Monitor erstellt werden. So kann der Implantologe die verbleibende Knochendicke nach der virtuellen Fertigstellung des Bohrstollens dreidimensional erfassen und beurteilen. Er kann mehrere Situationen vor der OP durchspielen und die geeignetste bestimmen.

Zur Bestimmung von Abweichungen ist es bevorzugt erfindungsgemäß vorgesehen, die Messdaten der ersten dreidimensionalen röntgenologischen Erfassung und die Messdaten der zweiten röntgenologischen Erfassung visuell, insbesondere in einer virtuellen dreidimensionalen Bildschirmdarstellung zu überlagern, insbesondere durch Elimination von Lageabweichungen zwischen den Referenzkörpern der Bohrschablone in den visuellen Darstellungen beider Erfassungen. Eine solche Überlagerung kann z.B. durch eine Software zur Darstellung der virtuellen 3D-Darstellung automatisch erfolgen, z.B. durch einen Best-Fit-Algorithmus, der die Referenzkörper der erstellten Bohrschablone in der zweiten röntgenologischen Erfassung auf die Referenzkörper der vorherigen Röntgenschablone in der ersten Erfassung zentriert. Eine Überlagerung kann jedoch grundsätzlich auch durch einen Chirurgen manuell erfolgen.

Durch Überlagerung oder Ein- und Ausblenden der virtuellen Implantate oder der Leitkanäle in der Ansicht einer Volumentomographie kann sich der Implantologe so ein genaues Bild der Abweichungen machen.

Zusätzlich kann beispielsweise auch der geplante Bohrstollen in der ermittelten Geometrie in den zweidimensionalen Schnittbildern wie auch in der dreidimensionalen Tomographieansicht visualisiert werden. Mit dieser Ansicht kann sich der Implantologe ein genaues Bild über den dem geplanten Implantat umliegenden Knochen machen.

Es kann mit jeder der Ausführungen eine korrekte Lage der Bohrhülsen, die später den Leitkanal für die Implantatbohrer bilden, überprüft werden.

Die Erfindung kann weiterhin vorsehen, dass zur Erzielung eines rotationsinvarianten Formschlusses zwischen einer jeweiligen zylindrischen Bohrhülse und eines darin einzusetzenden zylindrischen Referenzobjektes an den jeweiligen einander zugewandten Flächen angebrachte zueinander korrespondierende Strukturen miteinander in Eingriff gebracht werden, insbesondere Vorsprünge und Rücksprünge, bevorzugt Nut und Feder oder korrespondierende Außen- und Innenmehrkantformen. Es kann so im gefügten Zustand die exakte Rotationsposition der Bohrhülse zum Röntgenreferenzobjekt oder zum Implantat vorgegeben werden.

Die Erfindung kann auch vorsehen, dass bei der zweiten röntgenologischen Erfassung die Bohrschablone von einem röntgenabsorbierenden Material, z.B. Aluminium oder einem ähnlich schwach absorbierenden Material umgeben ist, insbesondere die Bohrschablone in einem Zylinder aus röntgenabsorbierendem Material, wie z.B. Aluminium oder einem ähnlich schwach röntgenabsorbierendem Material angeordnet ist. Hierdurch kann ein zumindest ungefähr ähnlicher Röntgenschwächungsgrat der Röntgenreferenzkörper bei der zweiten Erfassung in Relation zur ersten Erfassung erreicht werden. Dieser Zylinder, der nach oben und unten offen sein kann, simuliert das Weichgewebe des Patienten.

Über die beschriebene Verfahrensweise wird somit dem Chirurgen vor der Operation eine visuelle Möglichkeit der Darstellung der Abweichungen der Implantatposition in der gerenderten 3D-Ansicht und in den MPR-Darstellungen (Multiplanare Rekonstruktion) der Volumentomografie (DVT) oder der Computertomographie (CT) geboten. So kann der Chirurg die zu erwartende Position der zu setzenden Implantate mittels vorliegender Bohrschablone exakt bewerten.

Insgesamt wird über die dargestellte Erfindung das Prüfverfahren wesentlich einfacher werden. Dadurch könnte zukünftig die Genauigkeitsüberprüfung wesentlich häufiger zur Anwendung kommen und Teil eines Qualitätsmanagement werden.

Mit der vorliegenden Verfahrensbeschreibung wird die Überprüfbarkeit einer Bohrschablone mit den in der Zahnarztpraxis bereits vorhandenen Geräten ermöglicht und es werden neue Möglichkeiten der Visualisierung für die geplante Implantation mit Zahnimplantaten geschaffen.

Ein Ausführungsbeispiel der Erfindung wird anhand der nachfolgenden Figuren näher beschrieben.

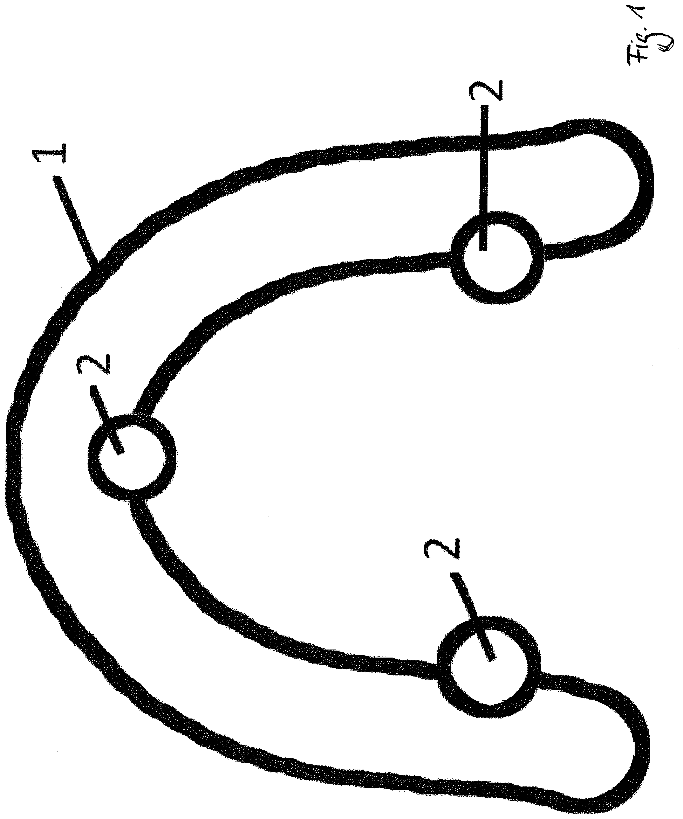

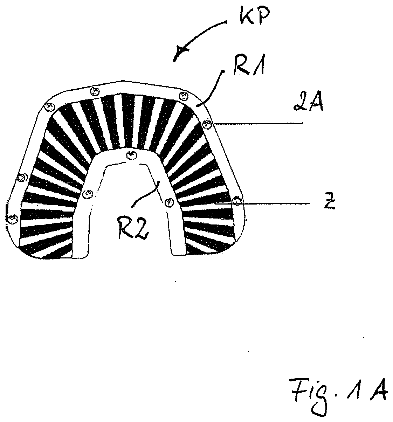

Die Figur 1 zeigt in Aufsicht ein Abdruckelement 1, das einen Negativabdruck einer Kieferstruktur eines Patienten aufweist, um einen eindeutigen Sitz auf dem Kiefer des Patienten zu gewährleisten.

An diesem Abdruckelement 1 wird eine Röntgenreferenz angebracht, die durch wenigstens drei an unterschiedlichen Positionen angeordnete in der Röntgenerfassung wieder identifizierbare röntgensichtbare Referenzkörpern 2 gebildet wird. Durch diese Anbringung wird aus dem Abdruckelement eine Röntgenschablone im Sinne der Erfindung gebildet.

Die Referenzkörper 2 sind beabstandet zueinander jeweils mit dem Abdruckelement 1 fest verbunden und dienen dazu die räumliche Lage des Abdruckelementes zu definieren, bzw. verschiedene Röntgenerfassungen derselben so gebildeten Röntgenschablone bzw. später weiterhin daraus gebildeter Bohrschablone in der Darstellung (bevorzugt virtueller 3D-Darstellung in Übereinstimmung / Übereinanderlage zu bringen.

Für eine erste röntgenologische Erfassung wird die Röntgenschablone aus dem mit den Referenzkörpern 2 versehenen Abdruckelement 1 am Kiefer, z.B. dem Unterkiefer oder dem Oberkiefer befestigt, in welchem wenigstens ein Implantat gesetzt werden soll, wobei aufgrund des Negativabdruckes eine eindeutige und reproduzierbare Passung mit den Kiefer erzielt wird. In der röntgenologischen Erfassung, die z.B. durch ein dreidimensionales dentales Volumentomogramm erfolgen kann, wird somit die Kieferstruktur des Patienten wiedergegeben, ebenso wie die röntgensichtbaren Referenzkörper 2. Anhand dieser Erfassung werden auch die geplanten Positionsdaten von Leitkanälen bzw. den Implantaten erstellt.

In einer möglichen Weiterbildung kann es hier vorgesehen werden, dass vor der ersten röntgenologischen Erfassung eine Kalibrier-Platte KP gemäß Figur 1A an der Röntgenschablone befestigt wird, z.B. durch Verkleben. Die Kalibrier-Platte KP zeichnet die Form des Zahnverlaufes bzw. des Kieferknochens nach, hat demnach im Wesentlichen in Aufsicht eine U-Form. Am äußeren Rand R1 und am inneren Rand R2 befinden sich zusätzliche Röntgenmarker 2A. Zwischen den Rändern R1 und R2 erstrecken sich Zonen Z mit unterschiedlichen, aber bekannten Röntgenschwächungsgraden.

Eine solche Kalibier-Platte KP kann zum Zweck der Kalibrierung nach Hounsfield-Einheiten bei der ersten röntgenologischen Erfassung miterfasst werden, Anschließend wird diese sofort wieder entfernt oder dient zwischenzeitig als Montageelement zur Befestigung der Röntgenschablone in einer übergeordneten Bearbeitungsstruktur für die Befestigung von wenigstens einer Bohrhülse. In diesem Fall wird die Platte KP vor der zweiten röntgenologischen Erfassung entfernt. In einem nachfolgenden erfindungsgemäßen Schritt wird die Röntgenschablone zu einer Bohrschablone umgearbeitet, wobei die Passung zum Kiefer des Patienten ebenso wie die Position der Referenzkörper 2 erhalten bleibt. Es wird hierfür wenigstens eine Bohrhülse an der Röntgenschablone befestigt, mit der ein Leitkanal definiert wird durch den hindurch später ein Implantatbohrer geführt wird, um die Implantatbohrung gemäß der Leitkanalausrichtung vorzunehmen.

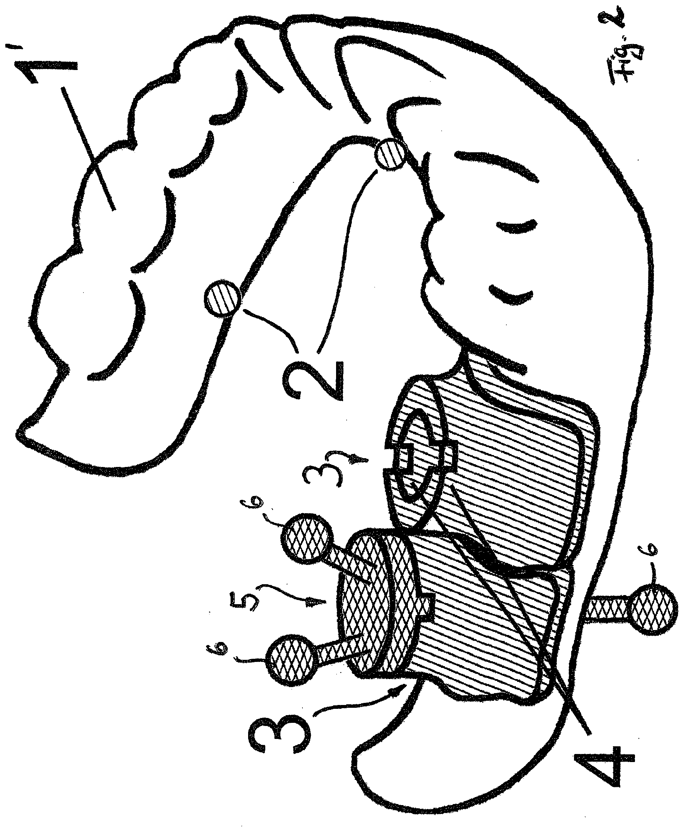

Die Figur 2 zeigt die für die Implantation angefertigte Bohrschablone 1', die der Röntgenschablone bzw. dem Abdruckelement 1 mit den Referenzkörpern 2 entspricht und die in diesem Beispiel zwei daran befestigte Bohrhülsen 3 aufweist. Die Bohrhülsen 3 sind hier in vorgefertigten Kanalelementen angeordnet, die in Abhängigkeit von geplanten Soll-Positionsdaten an der Röntgenschablone befestigt wurden, z.B. gemäß dem in der DE 10 2014 007 870 beschriebenen Verfahren.

Für die lagerichtige Positionierung der Implantate in der jeweils geplanten Rotationsposition können die Bohrhülsen 3 hier oberseitig in der stirnseitigen Ringfläche Kerben 4 aufweisen, insbesondere die radial zur Bohrhülsenachse verlaufen. Die Anzahl der Kerben, Kanten oder weitere nicht rotationssymmetrische Variationen werden vom jeweiligen Implantatsystem vorgegeben.

Die Figur 2 zeigt, dass in die linke Bohrhülse 3 ein Referenzobjekt 5 eingesetzt ist, das formschlüssig mit der Bohrhülse 3 verbunden ist. Ein zu den Kerben 4 korrespondierender Vorsprungbereich greift dabei in die Kerben 4 ein, so dass das Referenzobjekt 5 rotationsinvariant in der Bohrhülse 3 befestigt ist und dabei eine Lage einnimmt, die durch die Bohrhülsenausrichtung definiert ist.

Ein solches Referenzobjekt 5 weist hier drei röntgensichtbare Referenzkörper 6 auf. Anhand dieser Referenzkörper 6 kann die Lage einer Achse in einer röntgenologischer Erfassung bestimmt werden, deren Lage relativ zu den Referenzobjekten 6 bekannt ist und die sich bevorzugt parallel zu Mittelachse der Bohrhülse 3 einstellt, wenn das Referenzobjekt 5 in der Bohrhülse 3 angeordnet ist.

Von dieser in Figur 2 dargestellten Bohrschablone wird eine zweite röntgenologische Erfassung vorgenommen, nun ohne dass der Patient die Bohrschablone trägt. Die Erfassung ist bevorzugt technologisch identisch zur ersten Erfassung, d.h. z.B. ebenfalls durch ein dentales Volumentomogramm erzeugt, so dass sowohl erste als auch zweite Erfassung auf dieselbe Weise virtuell dreidimensional dargestellt werden können, z.B. anhand von DICOM-Dateien, die bei den Erfassungen erstellt werden.

Beide Erfassungen können so überlagert werden, dass die Referenzkörper 2, die in beiden Erfassungen erkennbar sind übereinander liegen. Die Ist-Positionsdaten der Leitkanäle, die sich aus der zweiten Erfassung ergeben, nämlich durch Bestimmung anhand der Referenzkörper 5, können sodann z.B. mit Soll-Positionsdaten von geplanten Leitkanälen verglichen werden, die sich aus der ersten Erfassung des Kiefers zusammen mit dem Abdruckelement 1 ergeben.

Hierzu können z.B. die den Ist-Positionen zugeordneten Leitkanäle und die den Soll-Positionen zugeordneten Leitkanäle virtuell visuell dargestellt werden, so dass ein Implantologe die Abweichungen nicht nur anhand von Zahlenwerten beurteilen kann, sondern visuell im Umgebungsfeld der Kieferstrukturvisualisierung, die sich ebenso aus der ersten Erfassung ergibt.

So kann bei evtl. Abweichungen beurteilt werden, ob der abweichende Leitkanal bei Durchführung einer Bohrung durch die betreffende Bohrhülse zu einer Verletzung von zu schützenden Bereichen führt, z.B. von Nervenbahnen, oder ob trotz einer Abweichung eine Verwendung der Bohrhülse erfolgen kann. Statt der Bestimmung der Abweichung von Leitkanälen kann auch die Bestimmung der Abweichung von Implantaten vorgenommen werden.

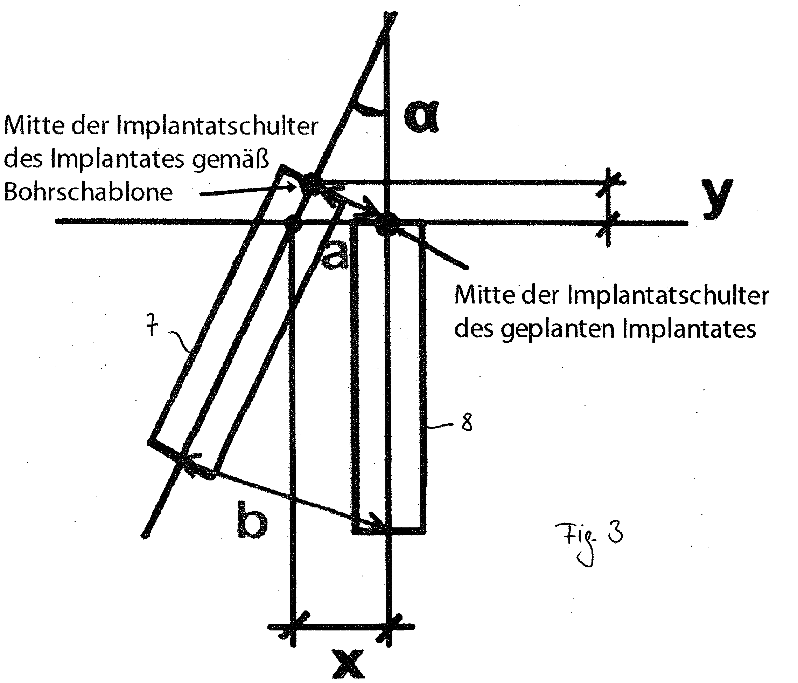

Die Figur 3 zeigt unter vereinfachter Weglassung von visualisierten Kieferstrukturen die Visualisierungen von Ist-Leitkanal 7 und Soll-Leitkanal 8, bzw. darin als angenommen gesetztes Implantat, insbesondere nur im 2D-Schnitt einer möglichen 3D-Visualisierung.

Z.B. direkt mittels der Bemaßungsfunktion der Software eines DVT- oder CT-Röntgengerätes können so Maße errechnet werden für die Abweichungen a der Mitte der Implantatschultern, der Winkelabweichung α der Implantatachsen und der Abweichungen b der Mitten der Implantatenden jeweils von dem geplantem Implantat zu demjenigen, das sich ergeben würde, wenn der Leitkanal der Bohrhülse benutzt würde. Der Implantologe kann so auch die errechneten Maße für eine Beurteilung der Präzision heranziehen.

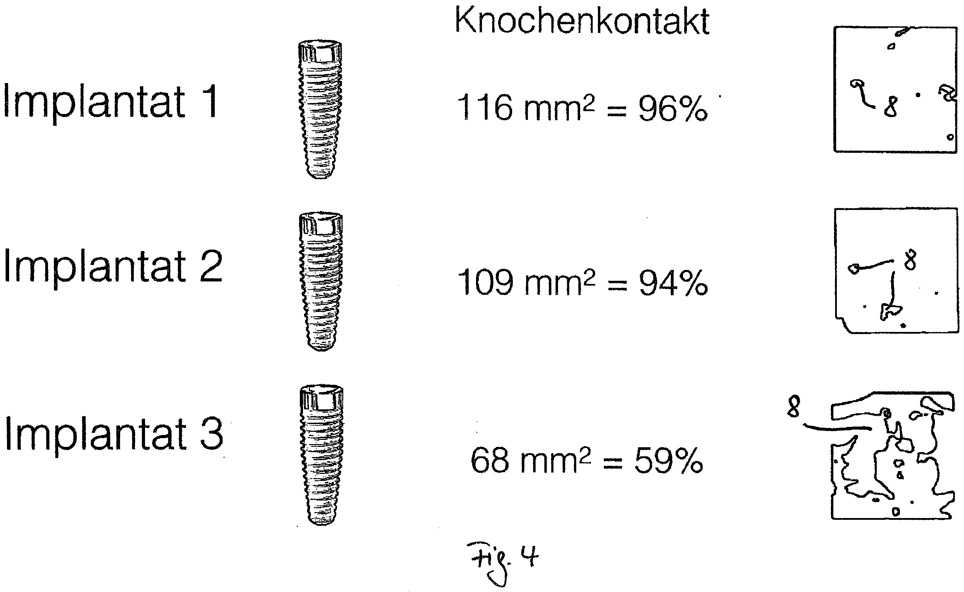

Die Figur 4 zeigt weiterhin für beispielsweise 3 verschiedene Implantate den jeweiligen prozentualen Anteil der Implantatoberfläche, die einen Kontakt zum Knochen des Kiefers hat. Dieser Anteil ist in der Mitte als reiner Zahlenwert dargestellt. Jeweils rechtsseitig ist zum Implantat auch eine plane Abwicklung des Implantatlagers visualisiert, also der Flächenbereiche der Implantatoberfläche, die einen Kontakt zum Knochen haben und somit als Lager wirksam sind. Hier werden dem Implantologen schon in der Visualisierung Probleme bei zu geringem Kontakt verdeutlicht. Die rechtseitige Abwicklung zeigt in den jeweils ausgesparten Bereichen 8 die Positionen an, in denen kein Kontakt zum Knochen vorliegt.

Die visualisierten Bereiche von Kontakt und Nicht-Kontakt zwischen Knochen und Implantatoberfläche bzw. das zahlenmäßige genannte Verhältnis werden bevorzugt automatisch aus den Daten der ersten und zweiten röntgenologischen Erfassung gebildet auf der Basis eines bestimmten einzusetzenden Implantates, dessen geometrische Daten, insbesondere Form und / oder Oberflächengröße, somit bekannt sind. Eine solche Auswertung kann durch die Software erfolgen, welche auch die Visualisierung der Überlagerung vornimmt.

## Patentansprüche

1. Verfahren zur Erfassung der Ausrichtung von wenigstens einer Bohrhülse (3) in einer Bohrschablone (1'), insbesondere relativ zum Kiefer einer Person, umfassend folgende Schritte:
a. Erstellen eines Abdruckelementes (1) mit einem Negativabdruck der Kieferstruktur einer Person
b. Erstellen einer Röntgenschablone (1,2) aus dem Abdruckelement (1) durch Einbringen von wenigstens drei zueinander beabstandeten röntgensichtbaren Referenzkörpern (2) in das Abdruckelement (1)
c. Durchführung einer ersten dreidimensionalen röntgenologischen Erfassung, bei welcher der Kiefer der Person zusammen mit der formschlüssig am Kiefer befestigten Röntgenschablone (1, 2) erfasst wird, insbesondere durch Dentale-Volumentomografie oder Computertomografie
d. Erstellung einer Bohrschablone (1') aus der Röntgenschablone (1,2) durch Befestigen wenigstens einer Bohrhülse (3) in/an der Röntgenschablone (1, 2), insbesondere in Abhängigkeit von Planungsdaten zur Erzielung eines geplanten Leitkanalverlaufes
e. Formschlüssiges Einsetzen eines Referenzobjektes (5) mit wenigstens drei beabstandeten röntgensichtbaren Referenzkörpern (6) in die wenigstens eine Bohrhülse (3)
f. Durchführung einer zweiten dreidimensionalen röntgenologischen Erfassung, bei welcher nur die Bohrschablone (1') außerhalb des Kiefers mit deren Referenzkörpern (2) und das wenigstens eine darin eingesetzte Referenzobjekt (5) mit dessen Referenzkörpern (6) erfasst wird.

2. Verfahren nach Anspruch 1, **dadurch gekennzeichnet, dass** anhand der Messdaten der ersten röntgenologischen Erfassung und der zweiten röntgenologischen Erfassung relativ zum Kiefer der Person Positionsdaten eines zu einer jeweiligen Bohrhülse (3) zugeordneten Leitkanales oder eines darin eingesetzten/einzusetzenden Implantates errechnet und mit zugehörigen geplanten Positionsdaten verglichen, insbesondere hieraus Abweichungen ermittelt werden.

3. Verfahren nach Anspruch 2, **dadurch gekennzeichnet, dass** Abweichungen ermittelt werden von
a. den Implantatschultern des virtuellen der Bohrhülse (3) zugeordneten Implantates und des virtuellen geplanten Implantates
b. den Implantatspitzen des virtuellen der Bohrhülse (3) zugeordneten Implantates und des virtuellen geplanten Implantates
c. den Mittenachsen des virtuellen der Bohrhülse (3) zugeordneten Implantates und des virtuellen geplanten Implantates
d. den axialen Rotationswinkelstellungen des virtuellen der Bohrhülse (3) zugeordneten Implantates und des virtuellen geplanten Implantates

4. Verfahren nach einem der vorherigen Ansprüche, **dadurch gekennzeichnet, dass** die Messdaten der ersten dreidimensionalen röntgenologischen Erfassung und die Messdaten der zweiten röntgenologischen Erfassung visuell, insbesondere in einer gerenderten virtuellen dreidimensionalen Bildschirmdarstellung überlagert werden, insbesondere durch Elimination von Lageabweichungen zwischen den Referenzkörpern (2) der Bohrschablone (1') in den visuellen Darstellungen beider Erfassungen und dass virtuell der jeweilige zu einer Bohrhülse (3) gehörende Leitkanal oder Bohrstollen oder ein darin einzusetzendes Implantat oder die Darstellung der Kontaktfläche zwischen Knochen und Implantat, bevorzugt der abgewickelten Kontaktfläche visualisiert wird, bevorzugt in Relation zum Kiefer und/oder einem geplanten Bohrkanal / Implantat visualisiert wird.

5. Verfahren nach einem der vorherigen Ansprüche, **dadurch gekennzeichnet, dass** zur Erzielung eines rotationsinvarianten Formschlusses zwischen einer jeweiligen zylindrischen Bohrhülse (3) und eines darin einzusetzenden zylindrischen Referenzobjektes (5) an den jeweiligen einander zugewandten Flächen angebrachte zueinander korrespondierende Strukturen (4) miteinander in Eingriff gebracht werden, insbesondere Vorsprünge und Rücksprünge, bevorzugt Nut und Feder oder Mehrkantformen.

6. Verfahren nach einem der vorherigen Ansprüche, **dadurch gekennzeichnet, dass** bei der zweiten röntgenologischen Erfassung die Bohrschablone (1') von einem Röntgenstrahlen abschwächenden Material, insbesondere Aluminium oder einem vergleichbar Röntgenstrahlen abschwächenden Material umgeben ist, insbesondere die Bohrschablone (1') in einem Zylinder aus diesem Material angeordnet ist.

7. Verfahren nach einem der vorherigen Ansprüche, **dadurch gekennzeichnet, dass** vor der ersten röntgenologischen Erfassung an der Röntgenschablone (1,2) eine Kalibrier-Platte (KP) befestigt wird, welche Röntgenmarker (2A) und mehrere Zonen (Z) mit unterschiedlichen, bekannten Röntgenschwächungsgraden aufweist, insbesondere wobei sich eine jeweilige Zone (Z) zwischen einem inneren und einem äußeren Rand (R1, R2) der Platte (KP) erstreckt, und die Kalibier-Platte (KP) vor der zweiten röntgenologischen Erfassung von der Röntgenschablone (1,2) entfernt wird.

8. System umfassend Bohrhülsen (3), die als Fertigelement in eine Röntgenschablone (1') einbringbar sind zur Definierung eines Leitkanales entlang der inneren Hülsenerstreckung und umfassend wenigstens ein Referenzobjekt (5), das wenigstens drei zueinander beabstandete röntgensichtbare Referenzkörper (6) trägt und das an die Bohrhülse (3) angepasst ist, um unter Formschluß darin eingesteckt zu werden.

9. System nach Anspruch 8, **dadurch gekennzeichnet, dass** eine jeweilige Bohrhülse (3) und ein jeweiliges Referenzobjekt (5) Strukturen (4) aufweisen, die aneinander angepasst sind, um bei Einsetzen eines Referenzobjektes (5) in eine Bohrhülse (3) ineinander zu greifen, insbesondere zur Erzielung einer Rotationsinvarianz,

10. System nach Anspruch 9, **dadurch gekennzeichnet, dass** die jeweiligen Strukturen (4) angeordnet sind an oder auf den aneinander angepassten Flächen, bevorzugt an den zylindrischen Flächen oder sich gegenüberliegenden Ringflächen.

11. System nach einem der vorherigen Ansprüche 8 bis 10, **dadurch gekennzeichnet, dass** eine Bohrhülse (3) und/oder ein Referenzobjekt (5) ein Mittel, insbesondere eine Klemmvorrichtung aufweisen, mittels der die Mittenachsen von Bohrhülse (3) und Referenzobjekt (5) aufeinander zentrierbar sind.

## Claims

1. Method for detecting the alignment of at least one drill sleeve (3) in a drill template (1'), in particular relative to the jaw of a person, comprising the following steps:
a. creating an impression element (1) with a negative impression of the jaw structure of a person,
b. creating an X-ray template (1, 2) from the impression element (1) by introducing at least three X-ray visible reference bodies (2), spaced apart from one another, into the impression element (1),
c. carrying out a first three-dimensional radiological detection, in which the jaw of the person, together with the X-ray template (1, 2) secured to the jaw with form-fit engagement, is detected, in particular by dental volume tomography or computer tomography,
d. creating a drill template (1') from the X-ray template (1, 2) by securing at least one drill sleeve (3) in/on the X-ray template (1, 2), in particular according to planning data for achieving a planned guide channel profile,
e. inserting a reference object (5), having at least three spaced-apart X-ray visible reference bodies (6), into the at least one drill sleeve (3) with form-fit engagement,
f. carrying out a second three-dimensional radiological detection, in which only the drill template (1'), located outside the jaw with its reference bodies (2), and the at least one reference object (5) inserted therein, with its reference bodies (6), is detected.

2. Method according to Claim 1, **characterized in that**, on the basis of the measurement data of the first radiological detection and of the second radiological detection relative to the jaw of the person, position data of a guide channel assigned to a respective drill sleeve (3), or of an implant inserted or to be inserted therein, are calculated and compared with associated planned position data, in particular to determine deviations therefrom.

3. Method according to Claim 2, **characterized in that** determination is made of deviations between
a. the implant shoulders of the virtual implant assigned to the drill sleeve (3) and of the virtual planned implant,
b. the implant apices of the virtual implant assigned to the drill sleeve (3) and of the virtual planned implant,
c. the central axes of the virtual implant assigned to the drill sleeve (3) and of the virtual planned implant,
d. the axial rotational angle positions of the virtual implant assigned to the drill sleeve (3) and of the virtual planned implant.

4. Method according to one of the preceding claims, **characterized in that** the measurement data of the first three-dimensional radiological detection and the measurement data of the second radiological detection are visually superimposed, in particular in a rendered virtual three-dimensional screen representation, in particular by elimination of position deviations between the reference bodies (2) of the drill template (1') in the visual representations of both detections, and **in that** the respective guide channel or drill hole belonging to a drill sleeve (3), or an implant to be inserted therein, or the representation of the contact surface between bone and implant, preferably the developed contact surface, is visualized in a virtual manner, preferably in relation to the jaw and/or a planned drill channel/implant.

5. Method according to one of the preceding claims, **characterized in that**, in order to achieve a rotationally invariable form-fit engagement between a respective cylindrical drill sleeve (3) and a cylindrical reference object (5) to be inserted therein, structures (4) corresponding to each other on the respective mutually facing surfaces are brought into engagement with each other, in particular projections and recesses, preferably a groove and tongue or polygonal shapes.

6. Method according to one of the preceding claims, **characterized in that**, in the second radiological detection, the drill template (1') is surrounded by an X-ray attenuating material, in particular aluminium, or a comparable X-ray attenuating material, and in particular the drill template (1') is arranged in a cylinder made of this material.

7. Method according to one of the preceding claims, **characterized in that**, prior to the first radiological detection, a calibration plate (KP) is secured to the X-ray template (1, 2), which calibration plate (KP) has X-ray markers (2A) and a plurality of zones (Z) having different, known degrees of X-ray attenuation, in particular wherein each of the zones (Z) extends between an inner and an outer edge (R1, R2) of the plate (KP), and the calibration plate (KP) is removed from the X-ray template (1, 2) before the second radiological detection.

8. System comprising drill sleeves (3) which can be introduced as finished elements into an X-ray template (1') so as to define a guide channel along the inner extent of the sleeve, and comprising at least one reference object (5), which carries at least three spaced-apart X-ray visible reference bodies (6) and which is adapted to the drill sleeve (3) in order to be inserted therein with form-fit engagement.

9. System according to Claim 8, **characterized in that** a respective drill sleeve (3) and a respective reference object (5) have structures (4) which are adapted to each other in order to engage into each other when a reference object (5) is inserted into a drill sleeve (3), in particular to achieve invariable rotation.

10. System according to Claim 9, **characterized in that** the respective structures (4) are arranged at or on the mutually opposing surfaces, preferably at the cylindrical surfaces or mutually opposite ring surfaces.

11. System according to one of Claims 8 to 10, **characterized in that** a drill sleeve (3) and/or a reference object (5) have a means, in particular a clamping device, by which the central axes of drill sleeve (3) and reference object (5) can be centred with respect to each other.

## Revendications

1. Procédé de détection de l'orientation d'au moins un canon de perçage (3) dans un gabarit de perçage (1'), notamment par rapport à la mâchoire d'une personne, le procédé comprenant les étapes suivantes consistant à :
a. créer un élément d'impression (1) comprenant une impression négative de la structure de mâchoire d'une personne,
b. créer un modèle de rayons X (1, 2) à partir de l'élément d'impression (1) par introduction d'au moins trois corps de référence (2), visibles aux rayons X et espacés les uns des autres, dans l'élément d'impression (1),
c. réaliser un premier enregistrement radiographique tridimensionnel dans lequel la mâchoire de la personne est enregistrée avec le gabarit radiologique (1, 2) fixé par complémentarité de formes à la mâchoire, notamment par tomographie volumique dentaire ou tomodensitométrie,
d. créer un gabarit de perçage (1') à partir du gabarit radiographique (1, 2) par fixation d'au moins un canon de perçage (3) dans/sur le gabarit radiographique (1, 2), notamment en fonction de données de planification afin de réaliser un tracé de canal directeur planifié,
e. insérer par complémentarité de formes un objet de référence (5), comportant au moins trois corps de référence (6) visibles aux rayons X et espacés les uns des autres, dans l'au moins un canon de perçage (3),
f. réaliser un deuxième enregistrement radiographique tridimensionnel dans lequel sont seulement enregistrés le gabarit de perçage (1') à l'extérieur de la mâchoire avec les corps de référence (2) de celui-ci et l'au moins un objet de référence (5) inséré à l'intérieur avec les corps de référence (6) de celui-ci.

2. Procédé selon la revendication 1, **caractérisé en ce que** des données de position d'un canal directeur, associé à un canon de perçage respectif (3), ou d'un implant inséré/à insérer dans celui-ci sont calculées sur la base des données de mesure du premier enregistrement radiologique et du deuxième enregistrement radiologique, par rapport à la mâchoire de la personne et sont associées à des données de position planifiées, en particulier des écarts sont déterminés entre ces données de position.

3. Procédé selon la revendication 2, **caractérisé en ce que** des écarts sont déterminés par
a. les épaulements de l'implant virtuel associé au canon de perçage (3) et l'implant virtuel planifié,
b. les sommets de l'implant virtuel associé au canon de perçage (3) et de l'implant virtuel planifié,
c. les axes centraux de l'implant virtuel associé au canon de perçage (3) et de l'implant virtuel planifié,
d. les positions d'angle de rotation axiale de l'implant virtuel associé au canon de perçage (3) et de l'implant virtuel planifié.

4. Procédé selon l'une des revendications précédentes, **caractérisé en ce que** les données de mesure du premier enregistrement radiographique tridimensionnelle et les données de mesure du deuxième enregistrement radiographique sont superposées visuellement, notamment dans une représentation d'écran tridimensionnelle virtuelle rendue, notamment par élimination des écarts de position entre les corps de référence (2) du gabarit de perçage (1') dans les représentations visuelles des deux enregistrements et **en ce que** le canal directeur ou la cannelure de perçage respective, appartenant à un canon de perçage (3), ou un implant à insérer dans celui-ci ou celle-ci ou la représentation de la surface de contact entre l'os et l'implant, de préférence la surface de contact développée, est de préférence visualisée virtuellement par rapport à la mâchoire et/ou à un implant/canal de perçage planifié.

5. Procédé selon l'une des revendications précédentes, **caractérisé en ce que**, pour réaliser une liaison par complémentarité de formes, invariante en rotation, entre un canon de perçage cylindrique respectif (3) et un objet de référence cylindrique (5) à insérer dans celui-ci, des structures (4) mutuellement correspondantes montées sur les surfaces respectives se faisant mutuellement face sont amenés en engagement les unes avec les autres, notamment des saillies et des évidements, de préférence des languettes et des rainures ou des formes polygonales.

6. Procédé selon l'une des revendications précédentes, **caractérisé en ce que**, dans le deuxième enregistrement radiographique, le gabarit de perçage (1') est entouré d'un matériau atténuant les rayons X, en particulier de l'aluminium ou un matériau comparable atténuant les rayons X, en particulier le gabarit de perçage (1') est disposé dans un cylindre formé de ce matériau.

7. Procédé selon l'une des revendications précédentes, **caractérisé en ce qu'**une plaque d'étalonnage (KP) est fixée au gabarit radiographique (1, 2) avant le premier enregistrement radiographique, laquelle plaque d'étalonnage comporte des marqueurs radiographiques (2A) et une pluralité de zones (Z) présentant différents degrés d'atténuation de rayons X connus, en particulier une zone respective (Z) s'étendant entre des bords intérieur et extérieur (R1, R2) de la plaque (KP) et la plaque d'étalonnage (KP) étant retirée du gabarit radiographique (1, 2) avant le deuxième enregistrement radiographique.

8. Système comprenant des canons de perçage (3) qui peuvent être introduits comme élément fini dans un gabarit radiographique (1') pour définir un canal directeur le long de l'extension intérieure du canon et comprenant au moins un objet de référence (5) qui porte au moins trois corps de référence (6) visibles aux rayons X et espacés les uns des autres et qui est adapté au canon de perçage (3) pour y être inséré par complémentarité de formes.

9. Système selon la revendication 8, **caractérisé en ce qu'**un canon de perçage respectif (3) et un objet de référence respectif (5) comportent des structures (4) qui sont adaptées les unes aux autres pour s'engager les unes dans les autres lors de l'insertion d'un objet de référence (5) dans un canon de perçage (3), notamment pour obtenir une invariance rotationnelle.

10. Système selon la revendication 9, **caractérisé en ce que** les structures respectives (4) sont disposées contre ou sur les surfaces adaptées les unes aux autres, de préférence contre les surfaces cylindriques ou les surfaces annulaires opposées.

11. Système selon l'une des revendications précédentes 8 à 10, **caractérisé en ce qu'**un canon de perçage (3) et/ou un objet de référence (5) comportent un moyen, notamment un dispositif de serrage, à l'aide duquel les axes centraux du canon de perçage (3) et de l'objet de référence (5) peuvent être centrés l'un par rapport à l'autre.
